# EUROPÄISCHE PATENTSCHRIFT

(11) **EP 0 991 537 B1**
(45) Veröffentlichungstag und Bekanntmachung des Hinweises auf die Patenterteilung: **24.10.2001**
(21) Anmeldenummer: 98938684.2
(22) Anmeldetag: 03.07.1998
(51) Int. Cl.: B60H 1/22, B60H 1/00, B60R 16/02

(54) **ELEKTRISCHE ZUSATZHEIZUNG FÜR KRAFTFAHRZEUGE**
ELECTRICAL BACKUP HEATING FOR VEHICLES
CHAUFFAGE ELECTRIQUE D'APPOINT POUR VEHICULES

(30) Priorität: 04.07.1997 DE 19728589
(43) Veröffentlichungstag der Anmeldung: 12.04.2000
(73) Patentinhaber: AUDI AG, 85045 Ingolstadt (DE)
(72) Erfinder: WINKLER, Josef, D-85110 Kipfenberg (DE); ODENDALL, Bodo, D-86633 Neuburg (DE)
(86) Internationale Anmeldenummer: EP9804108
(87) Internationale Veröffentlichungsnummer: WO9901307

(56) Entgegenhaltungen:
- DE-A- 3 443 311
- DE-A- 3 509 073
- US-A- 5 288 974
- US-A- 5 545 930
- PATENT ABSTRACTS OF JAPAN vol. 008, no. 182 (M-319), 22. August 1984 & JP 59 075817 A (MATSUSHITA DENKI SANGYO KK), 28. April 1984

## Beschreibung

Die Erfindung betrifft eine elektrische Zusatzheizung für Kraftfahrzeuge gemäß dem Oberbegriff des Anspruchs 1 sowie ein Verfahren zur Steuerung einer derartigen elektrischen Zusatzheizung.

Die Beheizung des Innenraumes bei Kraftfahrzeugen erfolgt in der Regel durch die Motorabwärme. Bei winterlichen Bedingungen, insbesondere während der Startphase des Motors steht aber so gut wie keine Motorabwärme zur Verfügung. In diesem Fall erfolgt die Beheizung des Innenraums hauptsächlich mit Hilfe einer elektrischen Zusatzheizung.
Ein schnelles Aufheizen des Innenraums ist aber gerade bei winterlichen Bedingungen auch aus Sicherheitsgründen wichtig, da dadurch ein Beschlagen der Fahrzeugscheiben vermieden wird und außerdem das Auftauen vereister Fahrzeugscheiben beschleunigt wird. Weiterhin ist ein schnelles Aufheizen des Innenraumes auch aus Komfortgründen wünschenswert.
Aufgrund des immer weiter verbesserten Wirkungsgrades der Verbrennungsmotoren, insbesondere der Dieselmotoren, nimmt jedoch die zur Verfügung stehende Motorabwärme immer mehr ab.

Die elektrische Zusatzheizung ist in bekannter Weise an das Bordnetz des Kraftfahrzeuges angeschlossen. Die Energieversorgung erfolgt über einen vom Verbrennungsmotor angetriebenen Drehstromgenerator, dessen Spannungsabgabe elektronisch geregelt drehzahlunabhängig ist. Die Generatorleistung steigt mit wachsender Drehzahl an.

Zum schnellen Aufheizen des Innenraums ist es notwendig, die Generatorleistung so gut wie möglich auszunutzen. Wird die maximal zur Verfügung stehende Generatorleistung jedoch überschritten, so kommt es zu einem Entladen der Fahrzeugbatterie, dies gilt es jedoch unbedingt zu vermieden.

Aus der DE-OS 35 09 073 ist eine elektrische Heizung für Kraftfahrzeuge bekannt, bei der vier gleiche Heizelemente in Parallelschaltung im Bordnetz angeordnet sind. Mit Hilfe einer Regeleinheit werden die einzelnen Heizelemente über Relais zu- bzw. abgeschaltet. Die Regeleinheit steuert die Zu- bzw. Abschaltung der einzelnen Heizelemente derart, daß die zur Verfügung stehende Generatorleistung so gut wie möglich genutzt wird.
Reicht die Generatorleistung jedoch für den Betrieb eines der Heizelemente nicht aus, so erfolgt dessen Abschaltung, um dadurch ein Entladen der Fahrzeugbatterie zu vermeiden. Im Extremfall wird somit fast die volle Heizleistung eines einzelnen Heizelementes nicht genutzt und damit in diesem Fall 25% der Gesamtheizleistung "verschenkt". Dadurch verzögert sich der Aufwärmvorgang erheblich.

Aufgabe der Erfindung ist es, eine elektrische Zusatzheizung für Kraftfahrzeuge zu schaffen, die in einfacher Weise eine bessere Ausnutzung der Generatorleistung erlaubt, die einfach und kostengünstig herzustellen ist, und die einfach in vorhandene Heizsysteme von Fahrzeugen integrierbar ist.

Eine weitere Aufgabe der Erfindung ist es, ein Verfahren zur Steuerung einer elektrischen Zusatzheizung für Kraftfahrzeuge anzugeben, das eine optimale Ausnutzung der Generatorleistung ermöglicht.

Gelöst wird die gegenständliche Aufgabe durch die im Anspruch 1 angegebenen Merkmale. Die verfahrensgemäße Aufgabe wird durch die im Anspruch 6 angegebenen Merkmale gelöst.

Die wesentliche Idee der Erfindung besteht darin, als Heizelement einen Leistungstransistor vorzusehen, dessen Widerstand über die Steuerspannung U_{ST} regelbar ist. Die vom Leistungstransistor abgegebene Wärme wird mit Hilfe eines Luftstromes zum Fahrzeuginnenraum geführt.
Über die Steuerspannung läßt sich die Leistungsaufnahme des Leistungstransistors in einfacher Weise variieren und somit dem Leistungsüberschuß des Generators anpassen.
In einer Weiterbildung der Erfindung ist dem Leistungstransistor ein Widerstandselement nachgeschaltet, das fast die gesamte Heizleistung liefert. In diesem Fall dient der Leistungstransistor hauptsächlich als variabler Widerstand über den der Heizstrom und damit die Heizleistung des Widerstandselements gesteuert wird.
Die wesentliche Idee des erfindungsgemäßen Verfahrens besteht darin, die Auslastung des Drehstromgenerators zu ermitteln, wobei das Signal DF, das den Erregerstrom des Drehstromgenerators regelt, abgegriffen und einem Leistungsregler zugeführt wird. Der Leistungsregler regelt die Steuerspannung des Leistungstransistors so, daß die Generatorauslastung einem vorgegebenen Wert entspricht.

Nachfolgend ist die Erfindung anhand eines in der Zeichnung dargestellten Ausführungsbeispiels näher erläutert. Es zeigen:
- **Fig. 1**: schematische Darstellung einer elektrischen Zusatzheizung mit Drehstromgenerator und Batterie, gemäß einem ersten Ausführungsbeispiel,
- **Fig. 2**: schematische Darstellung einer Zusatzheizung mit Drehstromgenerator und Batterie, gemäß einem zweiten Ausführungsbeispiel,
- **Fig. 3**: schematische Darstellung einer elektrischen Zusatzheizung gemäß Fig. 1 bzw. Fig. 2 mit einem zusätzlichen in Serie geschaltetem Widerstandselement
- **Fig. 4a**: zeitlicher Spannungsverlauf am Ausgang DF eines Drehstromgenerators gemäß Fig. 1 bzw. Fig. 2 ohne Regelung des Leistungsreglers
- **Fig. 4b**: zeitlicher Spannungsverlauf am Ausgang DF eines Drehstromgenerators gemäß Fig. 1 bzw. Fig. 2 mit Regelung des Leistungsreglers
- **Fig. 5**: schematische Darstellung einer elektrischen Zusatzheizung gemäß Fig. 3 jedoch mit drei parallel geschalteten Widerstandselementen

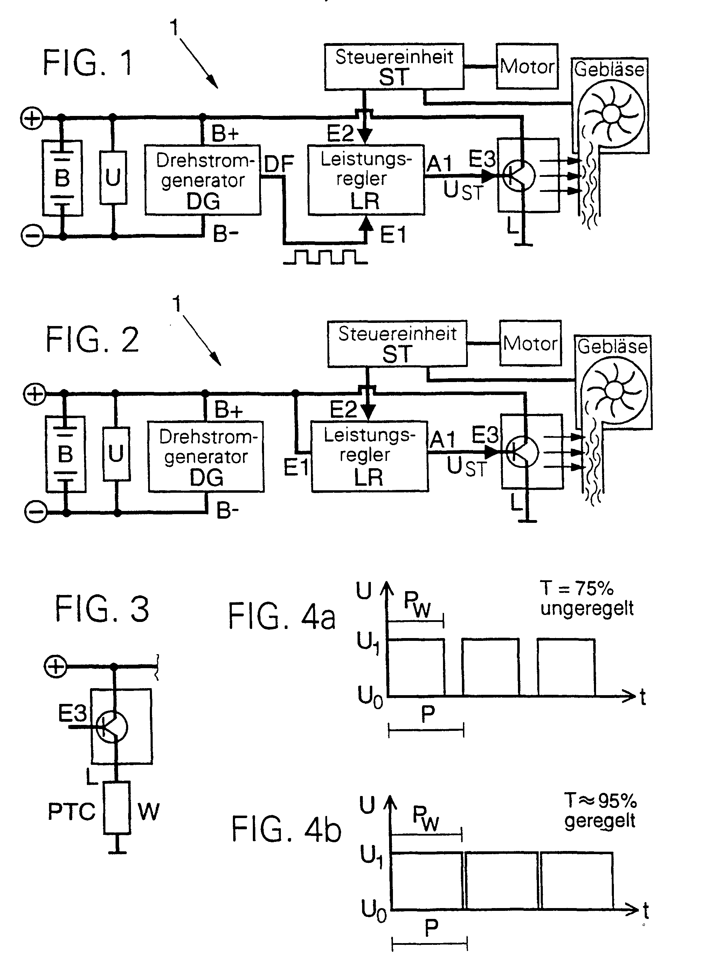

In einem Bordnetz 1 eines in der Zeichnung nicht dargestellten Kraftfahrzeuges sind eine Batterie B, verschiedene Verbraucher U und ein Drehstromgenerator DG parallel geschaltet (Fig.1). Die am Ausgang B+ (Klemme 30)des Drehstromgenerators DG anliegende Ausgangsspannung ist gleichgerichtet und entspricht etwa 14 V. Der Ausgang Bist mit der Fahrzeugmasse verbunden. Der Drehstromgenerator DG besitzt einen Erregerwicklungsanschluß DF, der mit einem Eingang E1 eines Leistungsreglers LR verbunden ist. Beim Betrieb des Drehstromgenerators DG liegt am Erregerwicklungsanschluß DF z.B. ein Signal gemäß Fig. 4a bzw. 4b an, wobei das Tastverhältnis T = Pulsbreite P_{w}/Periode P ein Maß für die Auslastung des Drehstromgenerators DG angibt.
Zur Ansteuerung eines Leistungstransistors L, der als Heizelement mit variablem Widerstand dient, ist ein Ausgang A1 des Leistungsreglers mit dem Steuereingang E3 des Leistungstransistors L verbunden. Dadurch läßt sich der Widerstand des Leistungstransistors L und damit die erzeugte Wärme, die durch den von einem Gebläse erzeugten Luftstrom abtransportiert wird, einfach regeln. Der Leistungsregler LR ist über eine Steuereinheit ST ansteuerbar. Die Steuereinheit ST regelt die gesamte Innenraumbeheizung des Fahrzeuges und ist u. a. mit dem Gebläse, dem Motor und weiteren Heizeinrichtungen verbunden. Sobald der Motor genügend Eigenwärme abgibt, erfolgt automatisch eine Zurücknahme der Zusatzheizung.
In vorteilhafter Weise handelt es sich bei dem Leistungstransistor um einen MOS-FET.

In Fig. 2 ist ein zweites Ausführungsbeispiel dargestellt, das im wesentlichen dem Ausführungsbeispiel gemäß Fig. 1 entspricht. Der einzige Unterschied besteht darin, daß der Leistungsregler LR nicht mit dem Erregerwicklungsanschluß DF, sondern über einen Eingang E1 mit dem positiven Pol des Bordnetzes verbunden ist.

Die Funktionsweise der Erfindung, die auch für die weiter unten angesprochenen Ausführungsbeispiele gilt, ist anhand von Fig. 4 näher dargestellt. Das Tastverhältnis des Spannungsverlaufs am Erregerwicklungsanschluß DF ist ein Maß für die Auslastung des Generators. Im dargestellten Fall Fig. 4a beträgt das Tastverhältnis T = 75 %. Dies bedeutet, daß 75 % der maximal möglichen Leistung des Drehstromgenerators DG im Bordnetz 1 verbraucht werden. Es stehen somit also noch ca. 25 % der Gesamtleistung zur Verfügung, die aber augenblicklich nicht genutzt werden. Die in Fig. 4a dargestellte Situation entspricht einer bestimmten Drehzahl N des Drehstromgenerators DG und einem konstanten Grundlast G der im Bordnetz angeschlossenen Verbraucher.
Durch Zuschalten von weiteren Verbrauchern, Erhöhung der Grundlast G, nimmt das Tastverhältnis T zu. Durch Erhöhen der Drehzahl N bei gleicher Grundlast nimmt das Tastverhältnis T ab. In Fig. 4a ist der Leistungsregler LR nicht eingeschaltet.

In Fig. 4b ist der Spannungsverlauf bei eingeschaltetem Leistungsregler LR gezeigt ( Tastverhältnis T etwa 95 %). Bei dem erfindungsgemäßen Verfahren wird die Auslastung des Drehstromgenerators DG ermittelt und durch Variation der Steuerspannung des als Heizelement dienenden Leistungstransistors L auf einen vorgegebenen Wert eingeregelt. In vorteilhafter Weise sollte die Auslastung bei ca. 95% liegen. Dadurch wird die mögliche Generatorleistung optimal genutzt und der Aufheizvorgang des Fahrzeuginneraums beschleunigt.
Bevorzugt wird das Signal DF des Drehstromgenerators DG auswertet, um dadurch die Auslastung zu bestimmen. Der Leistungsregler LR steuert die Steuerspannung U_{ST}, die am Steuereingang E3 anliegt, dann so, daß das vorgegebene Tastverhältnis T von etwa 95 % permanent aufrechterhalten wird.
Bei einer Änderung der Drehzahl N oder der Grundlast G wird die Steuerspannung U_{ST} entsprechend nachgeregelt, so daß die Generatorauslastung und damit die gesamte Heizleistung der Zusatzheizung maximal ist.

In einem weiteren Ausführungsbeispiel wird die Bordnetzspannung dem Leistungsregler LR zugeführt. Die Steuerspannung U_{ST} wird so eingestellt, daß die Bordnetzspannung nicht unter einen bestimmten Grenzwert absinkt, ab dem eine Entladung der Batterie eintreten würde. Auch hier läßt sich die Generatorleistung optimal nutzen, da sich die Leistungsabgabe des Leistungstransistors L einfach und schnell sehr genau regeln läßt.

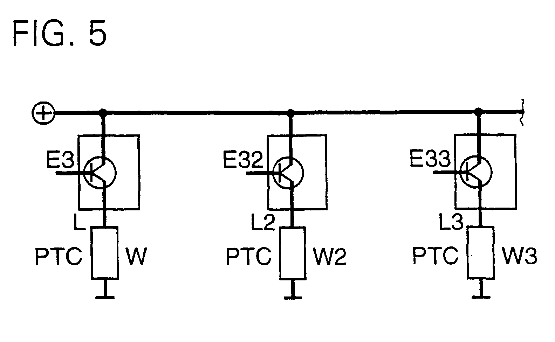

In Fig. 3 ist ein verbessertes Ausführungsbeispiel dargestellt, bei dem ein Widerstandselement W dem Leistungstransistor L nachgeschaltet ist. Bei diesem Ausführungsbeispiel, das im übrigen den Schalbildern gemäß Fig. 1 bzw. 2 entspricht, wird der Großteil der benötigten Wärmemenge vom Widerstandselement W erzeugt. Dadurch kann der Leistungstransistor L relativ einfach und kostengünstig ausgebildet sein. Der Leistungstransistor L dient hierbei hauptsächlich als steuerbarer variabler Widerstand, der den Strom über das Widerstandselement W regelt. Natürlich dient auch in diesem Fall der Leistungstransistor L als Heizelement, wenn auch in erheblich geringerem Maße. Seine Abwärme wird bevorzugt ebenfalls über das Gebläse abgeführt.
In vorteilhafter Weise werden Kaltleiter (PTC-Widerstand) für das Widerstandselement W verwendet, die ab einer gewissen Temperatur einen stark ansteigenden Widerstandswert annehmen und so selbstregelnd ihr eigenes Überhitzen verhindern und gleichzeitig als Überlastschutz für den Leistungstransistor L dienen.
Solche Kaltleiter werden bereits häufig bei Zusatzheizungen für Fahrzeuge eingesetzt.
Meist werden bei Fahrzeugen mehrerer derartiger Kaltleiter parallel angeordnet und je nach verfügbarer Generatorleistung zugeschaltet. Eine derartige Parallelschaltung mit drei Kaltleitern W, W2, W3 ist in Fig. 5 dargestellt. Zusätzlich ist jedem Kaltleiter W ein Leistungstransistor L, L2, L3 vorgeschaltet. Das Ausführungsbeispiel gemäß Fig. 5 entspricht im Prinzip drei parallel angeordneten Ausführungsbeispielen gemäß Fig. 3.
Der in Fig. 5 nicht dargestellte Leistungsregler, der im wesentlichen dem Leistungsregler LR gemäß Fig. 1 bzw Fig. 2 entspricht, erzeugt in diesem Fall drei Steuerspannungen, die auf die entsprechenden Steuereingänge E3, E32, E33 der jeweiligen Leistungstransistoren L, L2, L3 gegeben werden. Eine Möglichkeit der Ansteuerung besteht darin, je nach Generatorauslastung, zuerst die Steuerspannung E3 hochzufahren bis die volle Heizleistung des Kaltleiters W zur Verfügung steht.
Ist die Generatorleistung noch nicht vollständig ausgeschöpft, so wird die Steuerspannung E32 hochgefahren. Wenn noch mehr Generatorleistung verfügbar ist, wird die Steuerspannung E33 hochgefahren, bis die Maximale Heizleistung (z.B. 1000 Watt) zur Verfügung steht.
Dieses Ausführungsbeispiel läßt sich am einfachsten serienmäßig umsetzen, da hierzu nur die entsprechenden Leistungstransistoren L, L2, L3 vor den entsprechenden Kaltleitern und der notwendige Leistungsregler angeschlossen werden müssen. Hierbei kann sogar die bekannte Relais-Steuerung übernommen werden, die nach und nach alle drei Kaltleiter W einschaltet. In diesem Fall reicht ein Leistungsregler LR mit nur einer Steuerspannung Ust aus, die auf alle drei Steuereingänge E3, E32 und E33 gegeben wird. Beim Zuschalten eines weiteren Kaltleiters wird die Steuerspannung Ust entsprechend nachgeregelt.
Dadurch läßt sich in sehr einfacher Weise die verfügbare Generatorleistung des Drehstromgenerators DG optimal nutzen.

Die erfindungsgemäße Vorrichtung bzw. das erfindungsgemäße Verfahren erlauben in einfacher und schneller Weise die Steuerung eines oder mehrerer Heizelemente bestehend aus jeweils einem Leistungstransistor L und ggf. einem nachgeschalteten Kaltleiter W derart, daß der Auslastungsgrad des Drehstromgenerators DG bei ca. 95 % liegt. Dieser Auslastungsgrad wird auch bei sich ständig ändernder Drehzahl N aufrechterhalten. Dadurch erfolgt eine äußerst rasche Erwärmung des Fahrzeuginnenraums. Nach erreichen der gewünschten Temperatur im Innenraum bzw. sobald genügend Motorabwärme zur Verfügung steht, kann die Zusatzheizung abgeschaltet werden.

## Patentansprüche

1. Elektrische Zusatzheizung (L,L2,L3,W,W2,W3) für Kraftfahrzeuge mit einem über einen Leistungsregler (LR) ansteuerbaren Heizelement, **dadurch gekennzeichnet, daß** das Heizelement ein Leistungstransistor (L,L2.L3) ist.

2. Elektrische Zusatzheizung (L,L2,L3,W,W2,W3) für Kraftfahrzeuge nach Anspruch 1, **dadurch gekennzeichnet, daß** der Leistungstransistor (L,L2,L3) ein MOS-FET ist.

3. Elektrische Zusatzheizung (L,L2,L3,W,W2,W3) für Kraftfahrzeuge nach einem der vorhergehenden Ansprüche, **dadurch gekennzeichnet, daß** ein Steuereingang (E3,E32,E33) des Leistungstransistors (L,L2,L3) mit einem Leistungsregler (LR) verbunden ist.

4. Elektrische Zusatzheizung (L,L2,L3,W,W2,W3) nach einem der vorhergehenden Ansprüche, **dadurch gekennzeichnet, daß** dem Leistungstransistor (L,L2,L3) ein Kaltleiter (W,W2,W3) in Reihe nachgeschaltet ist.

5. Elektrische Zusatzheizung (L,L2,L3,W,W2,W3) nach Anspruch 4, **dadurch gekennzeichnet, daß** parallel zum Leistungstransistor (L) und Kaltleiter (W) jeweils zwei weitere Leistungstransistoren (L2, L3) mit entsprechenden Kaltleitern (W2, W3) geschaltet sind, deren Steuereingänge (E32) und (E33) ebenfalls mit dem Leistungsregler (LR) verbunden sind.

6. Verfahren zur Ansteuerung einer Zusatzheizung (L,L2,L3,W,W2,W3) für Kraftfahrzeuge, bei dem die Auslastung eines Drehstromgenerators (DG) ermittelt wird und durch Variation der Steuerspannung (E3,E32,E33) eines Leistungstransistors (L,L2,L3) die Auslastung auf einen bestimmten Wert eingeregelt wird.

7. Verfahren nach Anspruch 6, bei dem der Wert der Auslastung 95% beträgt.

8. Verfahren nach Anspruch 5 oder 6, mit den weiteren Merkmalen, daß Bestimmung der Auslastung des Drehstromgenerators (DG) über die Auswertung des Signals (DF) des Drehstromgenerators (DG) erfolgt.

## Claims

1. Additional electric heating (L, L2, L3, W, W2, W3) for motor vehicles with a heating element, which can be controlled by way of a power regulator (LR), **characterized in that** the heating element is a power transistor (L, L2, L3).

2. Additional electric heating (L, L2, L3, W, W2, W3) for motor vehicles according to Claim 1, **characterized in that** the power transistor (L, L2, L3) is a MOS-FET.

3. Additional electric heating (L, L2, L3, W, W2, W3) for motor vehicles according to one of the preceding claims, **characterized in that** a control input (E3, E32, E33) of the power transistor (L, L2, L3) is connected to a power regulator (LR).

4. Additional electric heating (L, L2, L3, W, W2, W3) according to one of the preceding claims, **characterized in that** a PTC resistor (W, W2, W3) is connected in series downstream of the power transistor (L, L2, L3).

5. Additional electric heating (L, L2, L3, W, W2, W3) according to Claim 4, **characterized in that,** two additional power transistors (L2, L3) with corresponding PTC resistors (W2, W3) are each connected parallel to the power transistor (L) and PTC resistor (W), their control inputs (E32) and (E33) also being connected to the power regulator (LR).

6. Method of controlling additional heating (L, L2, L3, W, W2, W3) for motor vehicles, in which the load of a three-phase generator (DG) is determined and the load is adjusted to a specific value by varying the control voltage (E3, E32, E33) of a power transistor (L, L2, L3).

7. Method according to Claim 6, in which case the value of the load amounts to 95%.

8. Method according to Claim 5 or 6, with the additional features that the load of the three-phase generator (DG) is determined by way of evaluating the signal (DF) of the three-phase generator (DG).

## Revendications

1. Chauffage électrique d'appoint (L, L2, L3, W, W2, W3) pour véhicules automobiles, avec un élément chauffant pouvant être commandé par l'intermédiaire d'un régulateur de puissance (LR), **caractérisé en ce que** l'élément chauffant est un transistor de puissance (L, L2, L3).

2. Chauffage électrique d'appoint (L, L2, L3, W, W2, W3) pour véhicules automobiles selon la revendication 1, **caractérisé en ce que** le transistor de puissance (L,L2,L3) est un transistor MOS-FET.

3. Chauffage électrique d'appoint (L, L2, L3, W, W2, W3) pour véhicules automobiles selon l'une des revendications précédentes, **caractérisé en ce qu'**une entrée de commande (E3, E32, E33) du transistor de puissance (L, L2, L3) est reliée à un régulateur de puissance (LR).

4. Chauffage électrique d'appoint (L, L2, L3, W, W2, W3) selon l'une des revendications précédentes, **caractérisé en ce qu'**un conducteur froid (W, W2, W3) est branché en série, en aval du transistor de puissance (L, L2, L3).

5. Chauffage électrique d'appoint (L, L2, L3, W, W2, W3) selon la revendication 4, **caractérisé en ce que**, chaque fois, deux autres transistors de puissance (L2, L3), à conducteurs froids (W1, W2) correspondants, dont les entrées de commande (E32) et (E33) sont également reliées au régulateur de puissance (LR), sont reliées sont branchés en parallèle du transistor de puissance (L) et du conducteur froid (W).

6. Procédé de commande d'un chauffage d'appoint (L, L2, L3, W, W2, W3) pour des véhicules automobiles, dans lequel le coefficient de charge d'un générateur de courant alternatif (DG) est déterminé et le coefficient de charge est réglé à une valeur déterminée, par une variation de la tension de commande (E3, E32, E33) d'un transistor de puissance (L, L2, L3).

7. Procédé selon la revendication 6, dans lequel la valeur du coefficient de charge est de 95 %.

8. Procédé selon la revendication 5 ou 6, présentant les caractéristiques supplémentaires selon lesquelles la détermination du coefficient de charge du générateur de courant alternatif (DG) s'effectue par le biais de l'évaluation du signal (DF) venant du générateur du courant alternatif (DG).
